# EUROPEAN PATENT APPLICATION

(11) **EP 4 825 804 A1**
(43) Date of publication of application: **21.10.2026**
(21) Application number: 24904269.8
(22) Date of filing: 11.12.2024
(51) Int. Cl.: C01D 7/22, C01D 15/08

(54) **SEPARATING METHOD OF LITHIUM CARBONATE**

(30) Priority: 12.12.2023 KR 20230179455
(71) Applicant: POSCO Holdings Inc., Pohang-si, Gyeongsangbuk-do 37859 (KR)
(72) Inventor: HAN, Gichun, Pohang-si, Gyeongsangbuk-do 37859 (KR); JEUNG, Kee Uek, Pohang-si, Gyeongsangbuk-do 37859 (KR)
(74) Representative: Pfenning, Meinig & Partner mbB
(86) International application number: PCT/KR2024/020269
(87) International publication number: WO 2025/127704

(57) **Abstract**

The method for separating lithium carbonate according to the present invention comprises: preparing a slurry comprising a mixture of an oxide containing one or more elements selected from the group consisting of Al and Si and lithium carbonate; adding a hydrophobizing agent to the slurry to change a particle surface of the lithium carbonate to be hydrophobic; injecting bubbles into the slurry and recovering a floating material; and filtering the floating material to recover lithium carbonate.

## Description

### [TECHNICAL FIELD]

The present invention relates to a method for separating lithium carbonate.

### [BACKGROUND ART]

As the era of electric vehicles has arrived, the lithium-ion battery industry is rapidly growing, and accordingly, demand for lithium as a battery material is continuously increasing.

Lithium is mainly used in industry in the form of carbonate or hydroxide. For example, naturally occurring lithium is ionized through leaching or the like, impurities are removed through purification, and then lithium salts are prepared through carbonation or crystallization and used in industry.

However, lithium carbonate is also partially present in nature, and intermediates or byproducts containing lithium carbonate may also exist.

At this time, in order to recover a small amount of lithium carbonate mixed with other materials, a method of leaching with an acid to ionize lithium and then carbonating the lithium again is generally used.

However, this method requires large-scale processing equipment in order to recover a small amount of lithium, and when lithium is leached, many types of impurities are inevitably leached together, and thus there is a problem in that the impurities must be purified again.

Accordingly, there is a demand for development of a technology capable of selectively separating lithium carbonate from a mixture containing a small amount of lithium carbonate.

### [DETAILED DESCRIPTION OF THE INVENTION]

### [Technical Problem]

The present invention is intended to provide a method for separating lithium carbonate, which is capable of selectively separating lithium carbonate from a mixture containing lithium carbonate, specifically a mixture containing a small amount of lithium carbonate.

### [Technical Solution]

The present invention provides a method for separating lithium carbonate, comprising: preparing a slurry comprising a mixture of an oxide containing one or more elements selected from the group consisting of Al and Si and lithium carbonate; adding a hydrophobizing agent to the slurry to change a particle surface of the lithium carbonate to be hydrophobic; injecting bubbles into the slurry and recovering a floating material; and filtering the floating material to recover lithium carbonate.

### [Advantageous Effects]

The method for separating lithium carbonate according to the present invention has an advantage in that only lithium carbonate can be selectively and easily separated from a mixture containing a small amount of lithium carbonate.

### [BRIEF DESCRIPTION OF THE DRAWINGS]

FIG. 1 shows mineral phase analysis results of a mixture containing lithium carbonate according to Example 1.
FIG. 2 shows mineral phase analysis results of a floating material according to Example 1.
FIG. 3 shows a lithium carbonate recovery rate according to pH in Example 2.
FIG. 4 shows mineral phase analysis results of a mixture containing lithium carbonate prepared from spodumene ore according to Example 3.
FIG. 5 shows mineral phase analysis results of a mixture containing lithium carbonate prepared from petalite ore according to Example 4.

### [MODE FOR CARRYING OUT THE INVENTION]

Hereinafter, embodiments of the present invention will be described in detail. However, these are provided as examples, and the present invention is not limited thereto, and the present invention is only defined by the scope of the claims to be described below.

In the present invention, when a member is referred to as being positioned "on" another member, this includes not only a case in which the member is in direct contact with the other member, but also a case in which another member is interposed between the two members.

In the present invention, when a part is referred to as "comprising" a certain component, this means that other components may be further included, rather than excluding other components, unless specifically stated to the contrary.

One aspect of the present invention relates to a method for separating lithium carbonate, comprising: preparing a slurry comprising a mixture of an oxide containing one or more elements selected from the group consisting of Al and Si and lithium carbonate; adding a hydrophobizing agent to the slurry to change a particle surface of the lithium carbonate to be hydrophobic; injecting bubbles into the slurry and recovering a floating material; and filtering the floating material to recover lithium carbonate.

The method for separating lithium carbonate according to the present invention has an advantage in that, by adding a hydrophobizing agent that changes a particle surface of lithium carbonate to be hydrophobic and then performing flotation, the lithium carbonate can be easily separated even when a small amount of the lithium carbonate is included.

### Preparing Slurry

The method for separating lithium carbonate according to the present invention includes preparing a slurry comprising a mixture of an oxide containing one or more elements selected from the group consisting of Al and Si and lithium carbonate.

In an embodiment of the present invention, the oxide containing one or more elements selected from the group consisting of Al and Si and the lithium carbonate may be derived from lithium-containing ore.

The method for separating lithium carbonate according to the present invention can selectively separate a small amount of lithium carbonate included in lithium-containing ore.

In another embodiment of the present invention, the lithium-containing ore may include one or more selected from the group consisting of spodumene, petalite, lepidolite, hectorite, eucryptite, jadarite, zinnwaldite, and amblygonite.

Specifically, the lithium-containing ore may be spodumene or petalite, but is not limited thereto.

However, when the lithium-containing ore is spodumene or petalite, there is an advantage in that costs can be relatively reduced, and thus this is preferable.

A method for obtaining, from the lithium-containing ore, the mixture including the oxide containing one or more elements selected from the group consisting of Al and Si and the lithium carbonate is not limited in the present invention.

For example, the mixture may be obtained by calcining the lithium-containing ore, and then performing sulfuric acid roasting, leaching, or the like.

Alternatively, the slurry may be obtained by carbonating the lithium-containing ore using a sodium carbonate solution.

The calcination may be performed at a temperature of 950°C to 1,100°C for 5 minutes to 5 hours, preferably 10 minutes to 3 hours, but is not limited thereto.

When the calcination is performed under conditions within the above range, phase transition of the lithium-containing ore from an α phase to a β phase is sufficient, and a phenomenon in which lithium leaching rate is reduced due to under-calcination or over-calcination can be suppressed, and thus this is preferable.

When the calcined lithium-containing ore is subjected to sulfuric acid roasting, lithium in the ore can be converted into a water-soluble material.

The sulfuric acid roasting may be performed at a temperature range of 175°C to 250°C, preferably 200°C to 250°C, for 30 minutes to 2 hours, preferably 30 minutes to 1 hour.

When the sulfuric acid roasting is performed within the above time range at the above temperature range, roasting time and energy consumption can be minimized, and thus this is preferable.

Thereafter, the roasted ore may be mixed with a solvent and subjected to water leaching, thereby obtaining a slurry comprising a mixture of an oxide containing one or more elements selected from the group consisting of Al and Si and lithium carbonate.

The solvent may be pure water or distilled water, but is not limited thereto.

The solvent preferably does not contain an acidic material such as sulfuric acid, but is also not limited thereto. When the solvent does not contain an acidic material such as sulfuric acid, it is preferable because it is environmentally friendly. In addition, even if the solvent contains a small amount of an acid material in a complicated process, if it can be recycled within a range that does not cause problems in the entire production process, it may be economically and environmentally preferable.

The carbonation may be performed by adding 0.3 L to 1.5 L of the sodium carbonate solution per 100 g of the lithium-containing ore and reacting the same at 200°C to 350°C, preferably 220°C to 300°C, more preferably 220°C to 250°C, for 30 minutes to 90 minutes, preferably 30 minutes to 60 minutes.

At this time, before carbonating the lithium-containing ore, the lithium-containing ore may be calcined, but is not limited thereto.

At this time, if necessary, a salt, hydroxide, or oxide containing aluminum, such as Al(OH)₃, may be further added. When the salt, hydroxide, or oxide containing aluminum is further added, as the content of oxides such as NaAlSi₂O₆·H₂O and HAlSi₂O₆ in the slurry to be described below increases, there is an advantage in that generation of lithium carbonate increases, and thus this is preferable.

In summary, the oxide containing one or more elements selected from the group consisting of Al and Si may be a leaching residue in a slurry obtained by leaching the lithium-containing ore.

In another embodiment of the present invention, the oxide containing one or more elements selected from the group consisting of Al and Si may include one or more selected from the group consisting of NaAlSi₂O₆·H₂O, HAlSi₂O₆, and SiO₂.

In another embodiment of the present invention, the lithium carbonate may be included in an amount of 35 wt% or less, specifically 30 wt% or less, based on the total weight of the mixture.

The oxide containing one or more elements selected from the group consisting of Al and Si may be included as a balance so as to satisfy 100 wt% of the total mixture.

In another embodiment of the present invention, in the preparing of the slurry, the slurry may have a concentration of 5 w/v% to 50 w/v%, preferably 10 w/v% to 40 w/v%, and more preferably 10 w/v% to 30 w/v%.

In another embodiment of the present invention, the preparing of the slurry comprising the mixture of the oxide containing one or more elements selected from the group consisting of Al and Si and lithium carbonate may include mixing the mixture of the oxide containing one or more elements selected from the group consisting of Al and Si and lithium carbonate with a solvent.

The solvent may be added so as to satisfy the above-described concentration of the slurry.

In another embodiment of the present invention, the solvent may include one or more selected from the group consisting of pure water, a solution of a lithium-containing carbonate, a solution of a lithium-containing chloride, and a solution of a lithium-containing hydroxide.

Preferably, the solvent may be a solution of a lithium-containing carbonate, a lithium-containing chloride, or a lithium-containing hydroxide, and more preferably, the solvent may be a solution of a lithium-containing carbonate.

When the solvent is a solution of a lithium-containing carbonate, the recovery rate of the lithium carbonate can be increased, and thus this is preferable.

In another embodiment of the present invention, in the preparing of the slurry, the slurry may have a pH of 8 or more, preferably 9 or more, and more preferably 9 to 10.

When the pH of the slurry satisfies the above range, the recovery rate of lithium carbonate can be increased, and thus this is preferable.

The pH of the slurry may be adjusted using hydrochloric acid, caustic soda, or the like, but is not limited thereto.

### Changing Particle Surface of Lithium Carbonate to be Hydrophobic

The method for separating lithium carbonate according to the present invention includes adding a hydrophobizing agent to the slurry to change the particle surface of the lithium carbonate to be hydrophobic.

In another embodiment of the present invention, the hydrophobizing agent may change only the particle surface of the lithium carbonate to be hydrophobic.

In another embodiment of the present invention, the hydrophobizing agent may be one or more selected from the group consisting of oleic acid, sodium oleate, and sodium dodecyl sulfate.

In another embodiment of the present invention, the hydrophobizing agent may be added in a volume of 0.001% to 1.0%, preferably 0.01% to 0.08%, based on the total volume of the slurry.

When the hydrophobizing agent is included within the above range, the amount of the hydrophobizing agent added can be minimized, and the effect of changing the particle surface of the lithium carbonate to be hydrophobic is sufficient, so that the recovery rate of the lithium carbonate can be maximized in the flotation step of lithium carbonate to be described below, and thus this is preferable.

After adding the hydrophobizing agent to the slurry, the slurry may be stirred at 100 rpm to 500 rpm for 1 minute to 10 minutes, preferably 2 minutes to 8 minutes, and more preferably 2 minutes to 5 minutes.

In summary, the method for separating lithium carbonate according to the present invention may further include stirring the slurry to which the hydrophobizing agent has been added.

When the step of stirring the slurry is further included, the time required for changing the particle surface of the lithium carbonate to be hydrophobic can be shortened, and the phenomenon in which the particle surface of the lithium carbonate is changed to be hydrophobic can be uniformly performed over the entire lithium carbonate particles, and thus this is preferable.

### Recovering Floating Material

The method for separating lithium carbonate according to the present invention includes injecting bubbles into the slurry and recovering a floating material.

The method for separating lithium carbonate according to the present invention may inject bubbles into the slurry to which the hydrophobizing agent has been added, so that only the lithium carbonate particles whose particle surfaces have been changed to be hydrophobic rise to the upper portion of the slurry together with the bubbles and can be recovered.

In another embodiment of the present invention, the injecting of bubbles into the slurry and recovering of the floating material may be a step of injecting air using a bubble generator and performing flotation.

In another embodiment of the present invention, the flotation may be performed for 1 minute to 10 minutes, preferably 1 minute to 6 minutes, and more preferably 1 minute to 3 minutes.

When the flotation is performed within the above time range, the flotation of the lithium carbonate particles whose particle surfaces have been changed to be hydrophobic is sufficient while shortening process time, so that the recovery rate of lithium carbonate can be increased, and thus this is preferable.

The recovering of the floating material may be performed at room temperature, but is not limited thereto.

The floating material may have a lithium carbonate content of 80 wt% or more, preferably 85 wt% or more, and more preferably 90 wt% or more, based on the total weight.

### Recovering Lithium Carbonate

The method for separating lithium carbonate according to the present invention includes filtering the floating material to recover lithium carbonate.

The filtering may be performed using a filter press, but is not limited thereto.

The method for separating lithium carbonate according to the present invention may further include drying the filtered lithium carbonate.

Specifically, after obtaining the filtered lithium carbonate, the filtered lithium carbonate may be dried at a temperature of 80°C to 100°C for 10 hours to 30 hours, preferably 15 hours to 28 hours, and more preferably 20 hours to 24 hours, but is not limited thereto.

The method for separating lithium carbonate according to the present invention has an advantage in that lithium carbonate can be easily separated even when a small amount of lithium carbonate is included, by adding a hydrophobizing agent to a slurry comprising a mixture of an oxide containing one or more elements selected from the group consisting of Al and Si and lithium carbonate to change only the particle surface of the lithium carbonate to be hydrophobic, and then performing flotation.

Hereinafter, preferred Examples and Comparative Examples of the present invention will be described. However, the following Examples are merely preferred embodiments of the present invention, and the present invention is not limited to the following Examples.

### Example 1

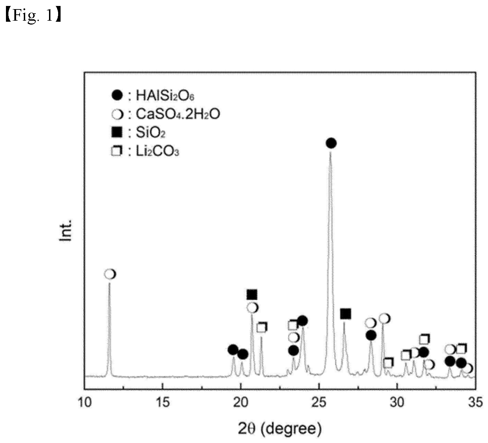

A mixture was prepared by mixing a residue prepared from spodumene ore by calcination, roasting, leaching, and purification, which was a material having HAlSi₂O₆, CaSO₄·2H₂O, and SiO₂ as main mineral phases, and lithium carbonate at 9:1 (weight ratio). The lithium content of the lithium carbonate mixture is shown in Table 1 below, and mineral phase analysis results according to XRD analysis are shown in FIG. 1.

An apparatus capable of floating lithium carbonate was in the form of a cylindrical tube, and a glass filter was mounted at a lower portion of the tube so that bubbles could be injected from the lower portion.

100 mL of a saturated lithium carbonate solution was placed in the apparatus, 20 g of the mixture was added thereto, and then 0.2 mL of oleic acid was added and stirred at 500 rpm for 2 minutes. After the stirring speed was reduced to 100 rpm, bubbles were injected from the lower portion through a bubble generator for 3 minutes.

During injection of the bubbles, a material rising to an upper portion of the solution together with the bubbles was recovered. All experiments were performed at room temperature. At this time, the pH of the solution was adjusted to pH 10 using hydrochloric acid and caustic soda.

The recovered material was filtered and then dried at 100°C for 24 hours, and then the lithium content was measured. The results are shown in Table 1 below.

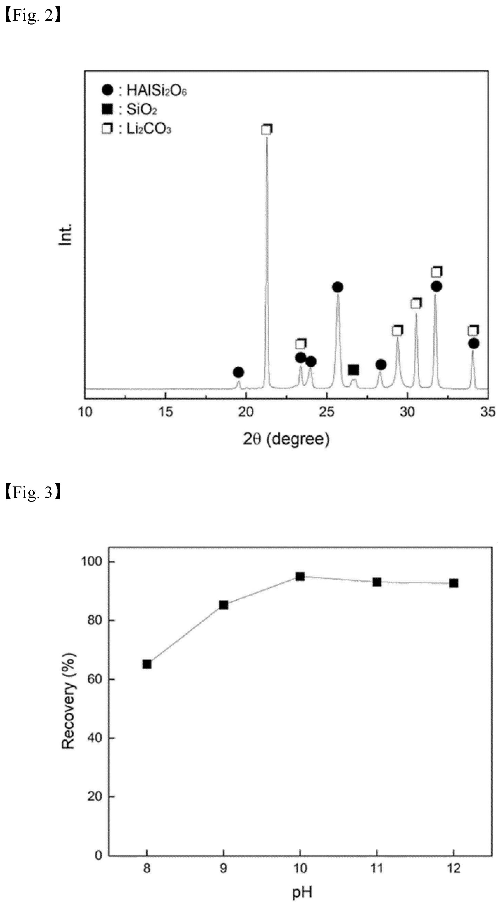

The lithium content of the lithium carbonate mixture was 1.8%, and the lithium content of the material recovered by flotation (floating material) was 15.5%. In addition, FIG. 2 shows the mineral phase of the recovered material, and the main mineral phase was lithium carbonate, some HAlSi₂O₆ and SiO₂ were observed, and CaSO₄·2H₂O was not identified. From these results, it can be seen that lithium carbonate can be selectively recovered.

**[Table 1]**

| | Li Content (%) |
|---|---|
| Lithium Carbonate Mixture | 1.8 |
| Recovered Material (Floating Material) | 15.5 |

### Example 2

100 mL of a saturated lithium carbonate solution was placed in the same apparatus as in Example 1, 20 g of the mixture prepared in Example 1 was added thereto, and then 0.2 mL of oleic acid was added and stirred at 500 rpm for 2 minutes. After the stirring speed was reduced to 100 rpm, bubbles were injected from the lower portion through a bubble generator for 3 minutes.

During injection of the bubbles, a material rising to an upper portion of the solution together with the bubbles was recovered. All experiments were performed at room temperature. At this time, the pH of the solution was adjusted from 8 to 11.6 using hydrochloric acid and caustic soda.

Each material recovered according to pH was filtered and then dried at 100°C for 24 hours, and the lithium carbonate recovery rate was measured. The results are shown in FIG. 3.

As shown in FIG. 3, the lithium carbonate recovery rate increased as the pH increased, and did not show a large change at pH 10 or more.

### Example 3

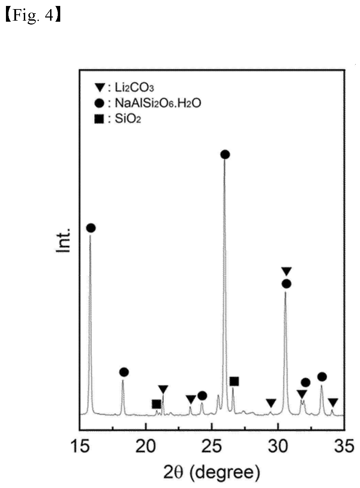

Spodumene ore was calcined at 1,100°C for 1 hour, and then 200 g of the calcined ore was added to 1 L of a 10% Na₂CO₃ solution and reacted at 220°C for 1 hour to obtain a mixture slurry containing NaAlSi₂O₆·H₂O, SiO₂, and Li₂CO₃ as main components. The mineral phase of the mixture slurry is shown in FIG. 4.

100 mL of the slurry was placed in the same apparatus as in Example 1, and then 0.2 mL of oleic acid was added and stirred at 500 rpm for 2 minutes. After the stirring speed was reduced to 100 rpm, bubbles were injected from the lower portion through a bubble generator for 3 minutes.

During injection of the bubbles, a material rising to an upper portion of the solution together with the bubbles was recovered. All experiments were performed at room temperature. At this time, the pH of the slurry was adjusted to 10.

The recovered material was filtered and then dried at 100°C for 24 hours, and then the lithium content was measured. The results are shown in Table 2 below. The lithium content of the lithium carbonate mixture was 2.5%, and the lithium content of the recovered material (floating material) recovered by flotation was 15.5%. From these results, it can be seen that lithium carbonate can be selectively recovered.

**[Table 2]**

| | Li Content (%) |
|---|---|
| Lithium Carbonate Mixture | 2.5 |
| Recovered Material (Floating Material) | 15.5 |

### Example 4

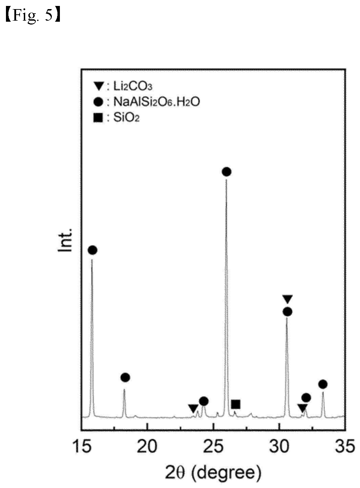

300 g of petalite ore and 51 g of Al(OH)₃ were added to 1 L of a 15% Na₂CO₃ solution and reacted at 250°C for 1 hour to obtain a mixture slurry containing NaAlSi₂O₆·H₂O, SiO₂, and Li₂CO₃ as main components. The mineral phase of the mixture slurry is shown in FIG. 5.

100 mL of the slurry was placed in the same apparatus as in Example 1, and then 0.2 mL of oleic acid was added and stirred at 500 rpm for 2 minutes. After the stirring speed was reduced to 100 rpm, bubbles were injected from the lower portion through a bubble generator for 3 minutes.

During injection of the bubbles, a material rising to an upper portion of the solution together with the bubbles was recovered. All experiments were performed at room temperature. At this time, the pH of the slurry was 10.

The recovered material (floating material) was filtered and then dried at 100°C for 24 hours, and then the lithium content was measured. The results are shown in Table 3 below. The lithium content of the lithium carbonate mixture was 1.5%, and the lithium content of the material recovered by flotation was 14.4%.

**[Table 3]**

| | Li Content (%) |
|---|---|
| Lithium Carbonate Mixture | 1.5 |
| Recovered Material (Floating Material) | 14.4 |

Referring to the above Examples, the method for separating lithium carbonate according to the present invention has an advantage in that lithium carbonate can be easily separated even when lithium carbonate is included in a small amount.

The present invention is not limited to the above Examples, and may be prepared in various different forms. A person having ordinary skill in the art to which the present invention pertains will understand that the present invention may be embodied in other specific forms without changing the technical spirit or essential features of the present invention. Therefore, the above-described Examples should be understood as illustrative in all respects and not restrictive.

## Claims

1. A method for separating lithium carbonate, comprising:
preparing a slurry comprising a mixture of an oxide containing one or more elements selected from the group consisting of Al and Si and lithium carbonate;
adding a hydrophobizing agent to the slurry to change a particle surface of the lithium carbonate to be hydrophobic;
injecting bubbles into the slurry and recovering a floating material; and
filtering the floating material to recover lithium carbonate.

2. The method for separating lithium carbonate of claim 1,
wherein the hydrophobizing agent changes only the particle surface of the lithium carbonate to be hydrophobic.

3. The method for separating lithium carbonate of claim 1,
wherein the hydrophobizing agent is one or more selected from the group consisting of oleic acid, sodium oleate, and sodium dodecyl sulfate.

4. The method for separating lithium carbonate of claim 1,
wherein the hydrophobizing agent is added in an amount of 0.001% to 1.0% based on a total volume of the slurry.

5. The method for separating lithium carbonate of claim 1,
wherein the oxide containing one or more elements selected from the group consisting of Al and Si comprises one or more selected from the group consisting of NaAlSi₂O₆·H₂O, HAlSi₂O₆, and SiO₂.

6. The method for separating lithium carbonate of claim 1,
wherein the lithium carbonate is included in an amount of 35 wt% or less based on a total weight of the mixture.

7. The method for separating lithium carbonate of claim 1,
wherein the oxide containing one or more elements selected from the group consisting of Al and Si and the lithium carbonate are derived from lithium-containing ore.

8. The method for separating lithium carbonate of claim 7,
wherein the lithium-containing ore comprises one or more selected from the group consisting of spodumene, petalite, lepidolite, hectorite, eucryptite, jadarite, zinnwaldite, and amblygonite.

9. The method for separating lithium carbonate of claim 1,
wherein injecting bubbles into the slurry and recovering the floating material comprises injecting air using a bubble generator and performing flotation.

10. The method for separating lithium carbonate of claim 9,
wherein the flotation is performed for 1 minute to 10 minutes.

11. The method for separating lithium carbonate of claim 1,
wherein preparing the slurry comprising the mixture of the oxide containing one or more elements selected from the group consisting of Al and Si and lithium carbonate comprises mixing the mixture of the oxide containing one or more elements selected from the group consisting of Al and Si and lithium carbonate with a solvent.

12. The method for separating lithium carbonate of claim 11,
wherein the solvent comprises one or more selected from the group consisting of pure water, a solution of a lithium-containing carbonate, a solution of a lithium-containing chloride, and a solution of a lithium-containing hydroxide.

13. The method for separating lithium carbonate of claim 1,
wherein, in the preparing of the slurry, the slurry has a concentration of 5 w/v% to 50 w/v%.

14. The method for separating lithium carbonate of claim 1,
wherein, in the preparing of the slurry, the slurry has a pH of 8 or more.
